# EUROPEAN PATENT APPLICATION

(11) **EP 2 676 545 A1**
(43) Date of publication of application: **25.12.2013**
(21) Application number: 13461513.7
(22) Date of filing: 27.03.2013
(51) Int. Cl.: A01M 1/02, A01M 1/10, A01M 1/14

(54) **Trap for monitoring the presence of insects**

(30) Priority: 21.06.2012 PL 39960812
(71) Applicant: Pankowski, Bartlomiej, 05-509 Piaseczno (PL)
(72) Inventor: Pankowski, Bartlomiej, 05-509 Piaseczno (PL)
(74) Representative: BRANDPAT Patent and Trademark Attorneys Chlebicka Czyz Galazkiewicz Ziolkowski Professional Partnership

(57) **Abstract**

A trap monitoring the presence of insects is a closed box made of a transparent material, said box comprising a lower part (1) and an upper part (2) connected tightly one with another, said upper part comprising a chamber (3) with an attractant pill, and the lower part (1) has openings (6) located at the bottom of the trap, said openings being connected with input channels (7) created at the bottom of the trap. A line made of glue (5) is laid onto the bottom of the lower part in order to catch insects.

The trap is used for monitoring the presence of insects, particularly confused flour beetles (Tribolium confusum) and red flour beetles (Tribolium castaneum).

## Description

An object of this invention is a trap for monitoring the presence of flight-incapable insects as well as the use of such a trap for monitoring the presence of flightless insects, especially confused flour beetles (Tribolium confusum) and red flour beetles (Tribolium castaneum).

Confused flour beetles and red flour beetles are the most often met farinaceous vermin. In the moderate climate, they appear usually only in closed rooms because they need suitably high temperatures for their development.

These small insects pose a serious economic problem connected with food storage, particularly in a case of flour and farinaceous products. They live most in great number in mills, bakeries, plants processing food, particularly dried tropical fruits and cocoa, that is in considerably dusty places.

Losses caused by these vermin are not only eaten grains or other foodstuffs but also polluting these products by excrements, exuviae, residues of chitinous exoskeletons, eggs and dead insects. Such food has changed taste, odour, colour, and can sometimes contain also toxic substances. The monitoring of the presence of these insects in repositories and food processing plants has a key meaning for the safety and the quality of products.

A monitoring trap is a specialist tool enabling the detection of the presence of insects in case of their occurrence in the given environment. A purpose of the trap is to unquestionably inform the specialist who fights insects about the presence of the insects in the monitored environment. A large difficulty in monitoring the presence of the abovementioned insects is caused by a series of specific methods of their behaviour, which makes it very difficult to construct an effective trap. Flour beetles are very careful insects but they may become very active in the direct proximity of the food.

The insect monitoring trap known from the US 5005416 publication have two chambers. The upper chamber has openings through which insects can get inside the trap, and the lower one is provided with a detector of vibrations enabling to detect the presence or the absence of live insects and to estimate their number. This is a trap intended to be plunged in a batch of a loose product, and it enables to detect the presence of insects and to estimate the quantity of insects in the batch.

Patent application BE1005772(A3) presents an insect catching device having a housing with an input as well as an attractant accommodating place. The input is located directly above the attractant accommodating place.

Patent application WO/1992/014358 presents a set for monitoring insects comprising a trap designed to catch creeping and flying imagoes or their larvae. The trap is comprised of two separate translucent plastic parts: an upper one and a lower one, said parts being fastened by snapping them on. The lower part comprises a lower cover with its insects receiving surface being covered with glue to arrest insects at the bottom of the well. The trap comprises also food or attractants to entice insects into the trap. Inlets for insects are made as openings in the side walls. Insects, in order to get to the attractant, slide down into the well in the central part of the lower element.

All the above solutions are described as being able to detect flightless insects, such as flour beetles. These known solutions often force insects to surmount obstacles standing in their way to the attractant, which makes them demotivated to reach the food in the practical situation when detecting insects in the store filled with food. As a result, such traps became ineffective in such places as flour storehouses or chocolate production lines because they are bypassed by insects.

Moreover, the standard method to catch insects in monitoring traps is to use an icky surface in them. An action of an icky trap in the pulverulent environment is difficult because dust deactivates the icky surface in a very short time. In very dusty rooms, it usually takes from 2 to 24 hours, whereas the monitoring trap should act effectively during at least one month.

Despite the generality of the occurrence of vermins, no trap monitoring the presence of flour beetles offered on the Polish, European and World markets is sufficiently effective at present. The great difficulty in monitoring the presence of these insects results from a number of their specific modes of behavior, making it very difficult to construct an effective detection trap.

When studying the mode of behaviour of flour beetles by means of different gradually evolving models of traps, there was noted the specific behaviour of insects decidedly preferring punctual sources of the odour to its emission from the whole periphery of the trap, as it is in the case of the known traps.

Moreover, it was observed that flour beetles, whenever it is possible in new places, move along the edges of walls, probably in order to reduce the threat. These insects, in contrast to several other running insects, move very carefully in the direction to the food or to the place from which the pheromone is emitted. It results from the observations carried out that insects entering the trap often stop, even for several hours, at the critical point at the outlet of the input channel in order to come to a decision whether to go inside or return.

It was also observed that the creation of a mechanical barrier, even having small dimensions, automatically reduces the motivation of insects to get into traps.

It was an aim of this invention to elaborate not only a light and simple trap resolving problems indicated above, but first of all an effective one in a case of the abundance of food since not requiring insects to overcome obstacles located in the way indicated by the attractant.

An object of this invention is a trap monitoring the presence of insects made as a closed box of a transparent material, consisting of the lower part and the upper one, both tightly connected together, said upper part comprising a chamber with an attractant pill, and at the bottom of the lower part there is glue to catch insects, and moreover, the lower part has lower openings connected with input channels shaped as an arch at the bottom of the trap, said channels making insects able to get inside the trap. The input channels start advantageously in a small bulge at the bottom of the trap and are shaped as an arch having its section adjusted to the size of insects.

A chamber located in the upper part of the trap, designed for an attractant pill, has an upper opening and a lower one, both enabling getting of the attractant odour in both directions, that means inwards and outwards the trap.

Advantageously, at least the inlet channels situated at the bottom of the trap are made of an electrostatic material.

Glue is laid on the bottom surface of the lower part of the trap as a line 0.5 - 10 mm, advantageously 6 mm, broad. This glue may be laid in an arc line being semi-circle in section, having a radius of 0.25 - 5 mm, advantageously 1 - 3 mm.

Advantageously, the lower part of the trap and the upper one are snapped on together.

An object of this invention is also the use of the trap described above to detect the presence of confused flour beetles (Tribolium confusum)and red flour beetles (Tribolium castaneum).

The trap is used by setting it and stabilizing on flat surfaces in monitored spaces.

In contrast to the known traps which have in their entry a mechanical barrier, often formed as a bulge or an edge, which together with a roof situated just above it create a means protecting against getting dust inside, which could deactivate the glue surface designed to catch tempted insects, the trap according to the invention has no such barriers. Insects get into the trap by walking on the surface of the ground with no mechanical obstacles ahead. It is a very important aspect in traps designed for flour beetles because insects, when seeking food, very unwillingly overcome any obstacles, especially when they are in a stressful situation, e.g. when they are not sure whether food or a place to which they are attracted by a pheromone is safe for them. It was observed during the research stage that an inclination angle of the ground has a very significant impact on abandoning the chosen pathways by insects. The trap according to the invention provides for insects the direct and unhindered inward access without any slopes or other obstacles created in the known traps in connection with the necessity to enable their operation in dusty rooms. Insects, getting into the trap along the input channels made in the lower part of the trap, move all the time on the flat ground on which the trap is placed, overcoming no mechanical obstacles.

Moreover, the designed arc shape of the input channels causes that each insect, when going along the inlet channel and getting into the interior of the trap and heading the internal edge surrounding the interior of the trap, has no possibility, when going along this edge, to find once more the edge of the input channel that could lead him to the exit from the trap. As a result, these insects, which after coming inside the trap want to go along the outer wall of the inlet channel, find its obsolescent bank, and most of them make up their mind to move further in the direction to the edge surrounding the interior of the trap, but not back to the input channel. This solution has a favourable influence on the effectiveness of the trap.

In the trap according to the invention, a food attractant is placed in the upper part of the trap in such a way that insects have no direct access to it. The attractant pill is placed in the chamber located at the border space between the inner side and the outer side of the trap. The chamber has an upper opening and a lower one, and the pill is located in this chamber so that one exposed part of the pill projects above the trap, and the second exposed part projects in it, thanks to which the attractant odour can be active in both directions, that means inwards and outwards the trap. The attractant odour can go out from the trap only by narrow inlet channels evolving into crevice outlets. Such construction creates two attractant influence areas, which is an effect responsible for the effectiveness of the trap. The first area has the low attractant concentration. It is created mainly as a result of emitting the attractant odour from that part of the pill which projects through the upper opening. The second area, inside the trap, leading until the outlet of the inlet channels is the area of the great attractant concentration created by the attractant odour emitted from the part of the pill protruding through the lower opening. Thanks to that, one can achieve a suitable small attractant concentration around the trap as well as a substantially greater concentration in its interior.

The solution of this type - the lower attractant concentration outside the trap and the greater point emission attracting enticed insects inwards the trap, which can be described as "simulating of the availability of the food" is a decisive reason of the successful trap operation. Insects, on their way to the source of the odour, chose the point sources of an odour attractive for them, guided by its concentration gradient.

Tests carried out over the trap and observations of specific behaviours of insects decidedly preferring punctual sources of the odour to its emission, for example from the whole circumference of the trap, as it is in a case of known traps, make it able to discover that insects moving in the direction of an attractant stopped at some distance from it, on the border of the icky surface laid on around the attractant. It was because of the fact that the willing of insects to get to the attractant were compensated by their fear of getting onto the icky area. In the solution according to this invention, two areas with the attractant odour, that is the outer calling one and the inner one simulating the food, make the insects go into the glue area where they are caught because they mistakenly recognized the area covered with glue as a central point of the attractant localization.

The material used when making the trap, that is an electrostatic plastic, makes particles of dust settle on the walls of input channels limiting the access of dust inwards the trap. Because input channels located at the bottom of the trap create the only way connecting the interior of the trap with its surrounding, the inlet channels made of an electrostatic material protect the interior of the trap against dust and make it entirely tight for dust.

One of the most important problems when constructing monitoring traps which have to work in very dusty environment is solved by the trap according to the invention. This is the problem connected with the effectiveness when catching insects. The usually used sticky surfaces made of the so-called eternally living glues (hot-melt, water-soluble type, etc.) cannot work effectively after impregnation with dust. The only glues working well in the above-mentioned circumstances are glues having the consistence of honey, semi-fluid or fluid, able to absorb dust. Glues characterized by maximal flow ability among the above non-stable glues able to absorb dust have the highest effectiveness against flour beetles. The liquid glues cause however the problem connected with transporting traps having such glue laid on their surface. Flat surfaces made of liquid glues have tendencies to flow down when transporting in an unsuitable position or when traps are placed on surfaces that are not parallel to the ground. The trap according to the invention removes that problem by laying glue in a single line 0.5 - 10 mm in width, advantageously 2 - 6 mm. This line may be created by any method, for example as a circle. The glue laid onto the surface creates a line which is semi-circle in its cross-section, having a radius of 0.25 - 5 mm, advantageously 1 - 3 mm, said glue, despite its liquidity, effectively adheres, thanks to the surface tension on the edge of the laid glue, to the substrate and does not flush down from it regardless of the inclination angle of the surface on which this glue is laid, and regardless of its degree of liquidity. Glue laid down in this manner has no possibility to flow.

The studies carried out on traps according to the invention proved their effectiveness resulting from the use of presented technical solutions optimised when basing on the knowledge concerning the way of the nourishment of insects, their migrations, food searching methods, etc.

The object of the invention is shown in an advantageous, non-limiting embodiment in figures, where Fig. 1 shows a perspective view of a trap according to the invention, Fig. 2 - the open trap according to the invention, Fig. 3 - the trap according to the invention in a cross-section, and Fig. 4 shows a bottom of the trap in a top view together with cross-sections of the bottom of the trap along the lines AA, BB and CC to show how input channels are led.

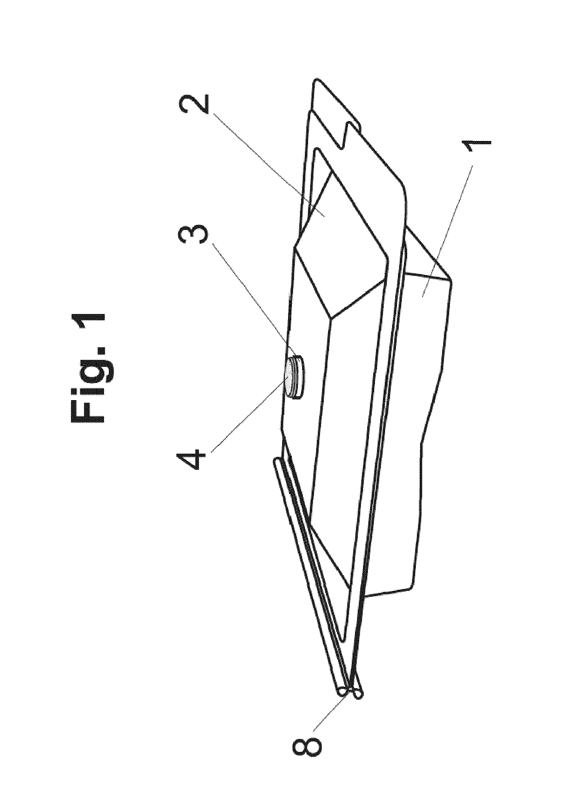

An insect trap shown in Fig. 1 is a transparent cuboid box comprising a lower part 1 and an upper part 2 connected tightly together, said upper part comprising the chamber 3 with an attractant pill 4. This trap may be entirely made of an electrostatic material.

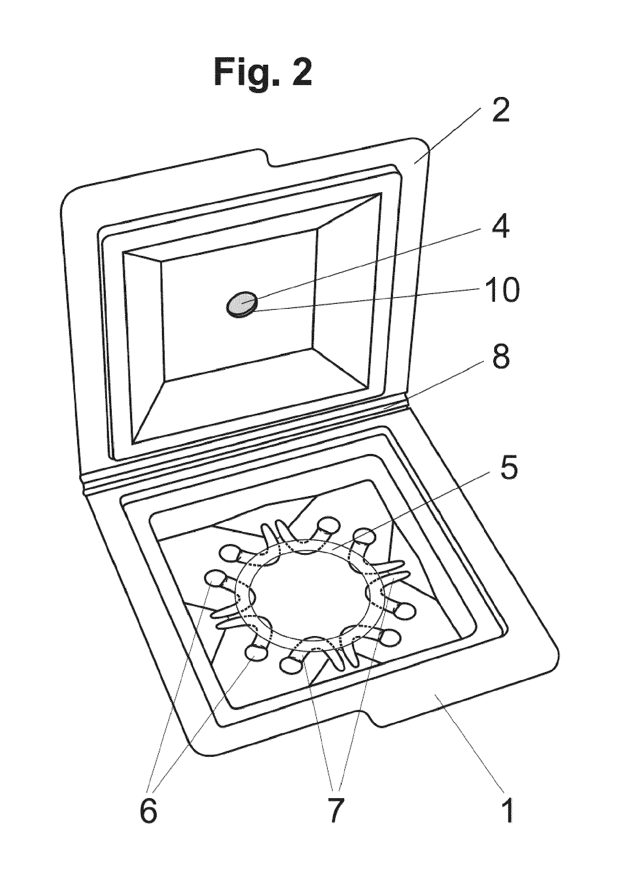

The trap shown in Fig. 2 is the open trap from Fig. 1, where the lower part and the upper one are connected firmly together by one connecting edge 8. The lower part 1 has eight lower openings 6 located at the bottom of the trap, connected with eight input channels 7 formed by arch-shaped stamping, said channels having an arc section adapted to dimensions of flour beetles, that is having the diameter of about 4 mm. The input channels 7 start in a small bulge at the bottom of the trap. On the surface of the bottom of the lower part there is laid glue 5 in a circle line about 6 mm wide. This glue 5 is laid as an arc line being semi-circle in section, advantageously having a radius of 3 mm.

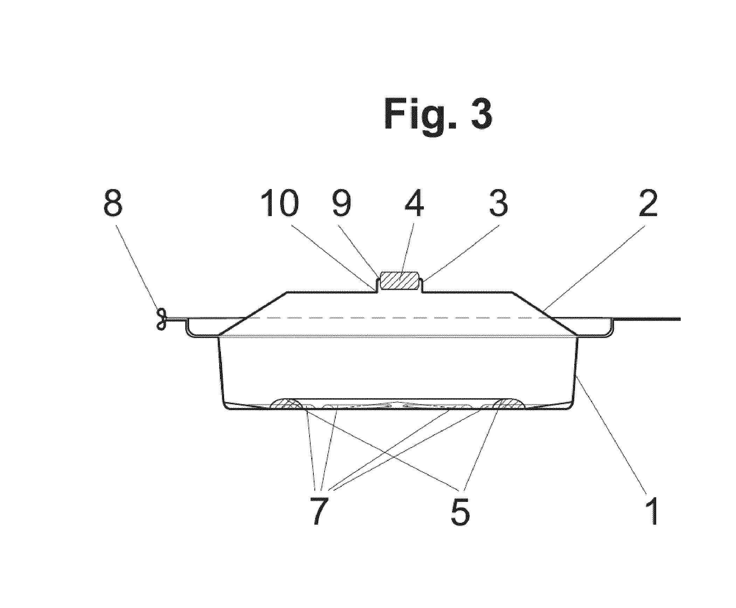

The trap is shown in a cross-section in Fig. 3, where the lower part 1 and the upper part 2 of the closed trap are snapped on together. A chamber 3 for an attractant pill 4 is formed in the middle of the upper part 2 of the trap as a cylinder having an upper opening 9 and a lower opening 10 having dimensions adapted to those of the attractant pill. The upper opening 9 enables emission of an attracting odour into the space around the trap, and the lower opening 10 enables emission of the odour into the trap with the gradient of concentration of the attractant in the input channels 7. At the bottom of the trap one can see the channels 7 starting in a bulge situated at the bottom of the trap, and glue 5 laid along the arc line.

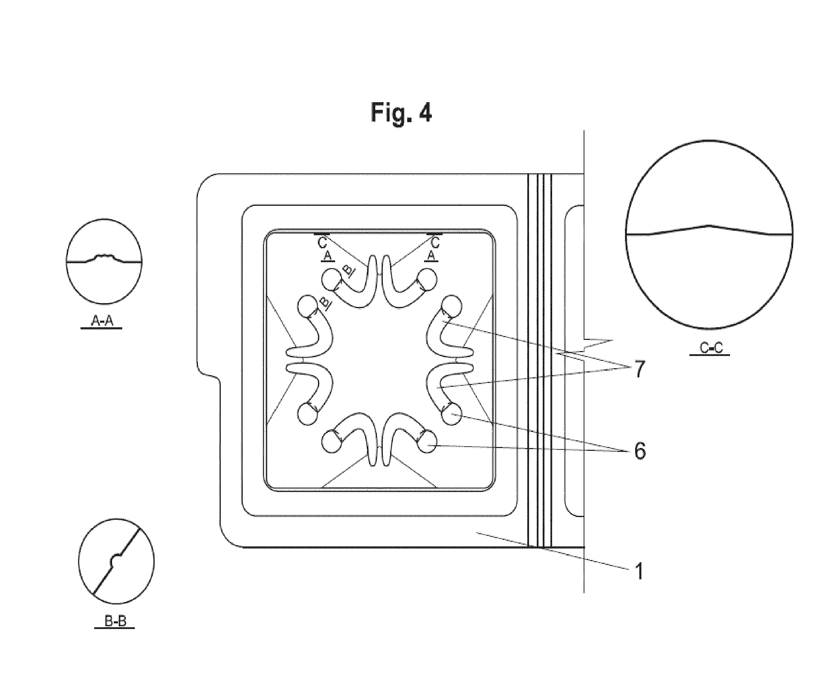

In Fig. 4 the bottom of the trap is shown in the vertical projection illustrating how the channels 7 run, together with sections of the trap bottom along the segments AA, BB and CC. The sections CC and AA show a small bulge at the bottom of the trap that lets insects go under the trap and get into the channels formed at this bottom, said channels starting at the end of the bulge. The section AA shows a situation when the process of formatting the channels in the bulge located in the lower part of the trap is beginning. These channels formed at the bottom have an arc section indicated as BB. They run along arc lines from the bulge at the bottom of the trap to the inlet openings 6 at the said bottom.

In its advantageous embodiment, the trap for monitoring insects is made as a transparent cuboid box having a lower part 1 and an upper part 2 tightly connected together, said upper part comprising a chamber 3 with an attractant pill 4. The lower part 1 has eight lower openings 6 located at the bottom of the trap and connected with eight input channels 7 stamped as arches with their sections adapted to the dimensions of flour beetles, that is 4 mm in diameter. These input channels 7 start in the small bulge at the bottom of the trap. On the surface of the bottom in the lower part there is laid glue 5 creating a circle with the line width of about 6 mm. This glue 5 creates the line having a section similar to a semi-circle, advantageously 3 mm in radius.

The chamber 3 for the attractant pill 4 is formed centrally in the upper part 2 of the trap as a cylinder having the upper opening 9 and the lower opening 10, the dimensions of which are adjusted to the dimensions of the attractant pill. The upper opening 9 enables the emission of the attractant odour into the space around the trap, and the lower opening 10 enables the emission of odour inwards the trap with the attractant concentration gradient in the inlet channels 7.

The trap is used for monitoring insects, particularly confused flour beetles (Tribolium confusum)and red flour beetles (Tribolium castaneum). The above-described trap is to be placed on flat surfaces, for example shelves, in rooms being monitored, and it should be stabilized.

The attractant pill placed in the upper part of the trap emits odour outside the trap creating the odour aura, the gradient of which call insects in its area. The attractant pill emits its odour also into the trap creating therein the odour concentration significantly greater than in the outer aura. This strong attractant odour is emitted outside through the narrow outlet channels. Insects attracted by the outer aura nearby the trap recognize the direct proximity of the food in the point sources of the concentrated odour spreading out nearby the outlets of the channels, they get inside the channels and, by trying to reach the mistakenly identified food, they get caught on the surface of the glue laid inside.

The presence of insects in the trap is checked advantageously in regular intervals, e.g. daily.

Parts of the trap:
(1) lower part
(2) upper part
(3) chamber for an attractant
(4) attractant pill
(5) glue
(6) lower openings
(7) inlet channels
(8) connecting edge
(9) upper opening in the chamber for an attractant
(10) lower opening in the chamber for an attractant

## Claims

1. A trap for monitoring the presence of insects, said trap being a closed box constructed of a transparent material and comprising a lower part and an upper part, said parts being tightly connected together, whereas said upper part comprises a chamber with an attractant pill, and glue is placed on the lower part to catch insects, **characterized in that** said lower part (1) has lower openings (6) made at the bottom of the trap, and arch input channels (7) made at the bottom of the trap are connected to said lower openings.

2. The trap according to Claim 1 **characterized in that** said input channels (7) start in a small bulge at the bottom of the trap and are shaped as arches having their section adjusted to the size of insects.

3. The trap according to Claim 1 or 2 **characterized in that** a chamber (3) has an upper opening and a lower one in an upper part (2) of the trap in order to obtain an attractant concentration gradient with a strong point emission outside the trap through input channels located at the bottom of the trap.

4. The trap according to Claim 1 - 3 **characterized in that** at least the input channels (7) shaped at the bottom of the trap are made of an electrostatic material.

5. The trap according to Claim 1 - 4 **characterized in that** glue (5) located on the bottom surface of the lower part 1 is a liquid glue laid as a line 0.5 - 10 mm wide, advantageously 2 - 6 mm.

6. The trap according to Claim 5 **characterized in that** said glue (5) laid onto a bottom surface of the lower part (1) creates an arc line with its section close to a semi-circle having a radius of 0.25-5 mm, advantageously 1 - 3 mm.

7. The trap according to Claim 1 - 6 **characterized in that** the lower part (1) and the upper part (2) in the closed trap are connected together by snapping them on.

8. A use of the trap according to Claim 1 - 7 to detect the presence of confused flour beetles (Tribolium confusum) and red flour beetles (Tribolium castaneum).

9. The use according to Claim 8 **characterized in that** the trap is placed and stabilized on flat surfaces in monitored rooms.
